# EUROPEAN PATENT SPECIFICATION

(11) **EP 3 108 215 B1**
(45) Date of publication and mention of the grant of the patent: **28.08.2019**
(21) Application number: 15705592.2
(22) Date of filing: 16.02.2015
(51) Int. Cl.: G01J 1/44, G01J 1/46, H04N 5/361

(54) **METHOD AND APPARATUS FOR EXTRACTING A DESIRED SIGNAL FROM A COMBINED SIGNAL**
VERFAHREN UND VORRICHTUNG ZUR EXTRAKTION EINES GEWÜNSCHTEN SIGNALS AUS EINEM KOMBINIERTEN SIGNAL
PROCÉDÉ ET APPAREIL PERMETTANT D'EXTRAIRE UN SIGNAL DÉSIRÉ À PARTIR D'UN SIGNAL COMBINÉ

(30) Priority: 18.02.2014 EP 14155566
(43) Date of publication of application: 28.12.2016
(73) Proprietor: EyeSense AG, 4051 Basel (CH)
(72) Inventor: MICHEL, Norbert, 91220 Schnaittach (DE); KÜSTER, Frank, 63897 Miltenberg (DE)
(74) Representative: Altmann Stößel Dick Patentanwälte PartG mbB
(86) International application number: PCT/EP2015/053219
(87) International publication number: WO 2015/124532

(56) References cited:
- JP-A- H01 232 886
- JP-A- S55 160 478
- US-A- 4 341 956
- US-A- 4 657 384
- US-A- 5 912 463
- US-A1- 2006 091 294
- US-A1- 2008 203 164

## Description

### Field of the invention

The present invention relates to a method and to an apparatus as well as to a use of the apparatus for extracting a desired signal from a combined signal, wherein the combined signal exhibits a magnitude which comprises a sum of the magnitude of the desired signal and the magnitude of an additional signal.

### Related art

It is a known problem in signal conditioning that a weak desired signal may be superimposed by a strong additional signal, such as by a disturbing signal and/or by fractions of noise, whereby, a magnitude of the additional signal may exceed the magnitude of the desired signal by one or more orders of magnitude. However, in order to allow, nevertheless, extracting the desired signal from a combined signal comprising both the desired signal and the additional signal various methods and devices have been proposed so far.

As long as the additional signal only comprises a static interference level, a simple separating capacitor may be applied in order to electronically remove the additional signal from the desired signal. However, such a provision will not be able to reliably remove the additional signal in case the interference level varies over time, such as with ambient light influencing a photo sensor.

Further known methods and devices which attempt to extract the desired signal from the combined signal are based on filtering of selected frequencies within a specific frequency range under simultaneous attenuation of frequencies outside the specific frequency range. Examples for suitable filtering devices may include resonant circuits as well as band filters. However, for low frequencies of the additional signal, particularly within the sub-Hertz region, the required filtering devices tend to become mechanically rather big, thereby impeding their integration into a small-scale set-up.

Further known methods and devices designed for extracting the desired signal from the combined signal are based on algorithms which allow separating the desired signal from the additional signal after a preceding conversion of the analogous combined signal into a digital signal. An example of a suitable device may include a digital signal processor (DSP), which may preferably be employed in environments where analog signals are constantly converted into digital signals, then digitally manipulated, and, optionally, converted back to analog signals. However, in situations where the additional signals considerably exceeds the desired signal, analog-to-digital converters with a resolution of 20 bits, 22 bits, or more are required which are still sophisticated and, thus, rather expensive.

In particular for extracting a weak desired signal superimposed by a strong additional signal, a device employing a lock-in principle may be used which allows extracting a desired signal with a known carrier wave from a rather noisy environment. Usually, a lock-in amplifier comprises an amplifier followed by an analog multiplier, wherein the input signal is cross-correlated with a reference signal, thereby providing amplification only within a very narrow band. By varying the phase of the reference signal, a synchronization between the input signal and the reference signal may be achieved. Thereafter, the multiplied signal is guided through a low-pass filter which largely averages out fractions of noise outside a modulation frequency of the carrier wave.

However, the methods and devices as known in signal conditioning so far require the combined signal to exhibit a voltage level arranged within a linear processing area between supply voltage rails. As an example for two supply voltage rails of 3 V (supply voltage) and 0 V (ground), the combined signal cannot exceed a value of 3 V since the supply voltage will not be able to provide voltages above 3 V usually designated as 'limiting level'. Thus, amplifying a desired signal of 1 µV based on an additional signal of 100 mV, i.e. a combined signal of 100.001 mV, by a factor of 1000 would result in an amplified combined signal of 100.001 V, which would, however, be limited to 3 V. Obviously, in this example it is not possible to extract the amplified desired signal of 1 mV from the amplified combined signal limited to 3 V by the limiting level.

JP 55160478 A describes a method and a device for removing noise and dark current which occur in a photo-electric converter by differentiating the output from a line sensor at non-lighting time from the output of the line sensor at lighting time. For this purpose, the signal at the non-lighting time is sampled to hold it in a sample-and-hold circuit.

JP 05145395 A describes a photo-electric switch for eliminating consecutive burst noise in a plurality of light-emitting pulses in the photo-electric switch. For this purpose two sample-and-hold circuits are provided which have a sampling point at a point of time just before the light-emitting pulse and just after the light-emitting pulse. The respectively sampled signals are then differentially amplified by a difference-amplifier circuit. An output of the difference-amplifier circuit is, further, discriminated by a comparator and, finally, an object-detection signal is obtained.

JP 06152364 A describes a method and a device for removing a burst like noise occurring during a plurality of the projection pulses in an electric switch. A photo-electric switch is provided with three different sample-and-hold circuits for holding a timing setup immediately before the reception of a photo-detecting signal, the receiving timing, and the timing setup after receiving the photo-detecting signal, respectively. The outputs of the first and the third sample-and-hold circuits are consecutively subtracted from the output of the second sample-and-hold circuit by two subtractors whose outputs are, finally, added for detecting the photo detecting signal.

DE 41 28 284 A1 described a method and a device for extracting a weak signal being superimposed by a strong and constant additional signal. According to this disclosure, a sensor comprises two outputs which are both connected to a synchronous demodulator, wherein, already in the basic version, at least two switches are required.

US 2001/0004388 A1 discloses an offset-control circuit for obtaining an output wave free from fluctuations. The offset-control circuit has offset-cancelling means for cancelling an offset component included in a pair of positive-phase and negative-phase signals by using at least one of a peak value and a bottom value of the mentioned signals. Preferably, the offset-cancelling means include a peak-value holding circuit and a bottom-value holding circuit as well as arithmetic means for performing operations by connecting the outputs of both holding circuits.

US 2006/0091294 A1 discloses a device and a method for interference suppression in optical or radiation sensors. Herein, an illumination transmitter transmits a pulse signal which can be switched 'on' and 'off'. Whereas a first sample-and-hold circuit samples the signal when the receiver is receiving the transmitter signal and the ambient radiation, a second sample-and-hold circuit samples the signal only when the receiver receives the ambient radiation. Subsequently, the signal from the second sample-and-hold circuit is subtracted from the signal of the first sample-and-hold circuit, thereby providing an output which is free from the signal of the ambient radiation.

US 4,816,752 A discloses a periodically energized sensor, wherein the output of the sensor is amplified. The amplified signal is applied to two separate sample-and-hold circuits which are alternately activated in response to the sensor drive, i.e. one sample-and-hold circuit is activated only when the sensor is energized whereas the other sample-and-hold circuit is activated only when the sensor is not energized. Thereafter, the values sampled in the respected circuits are subtracted from each other for cancelling the amplifier offset.

US 5 912 463 A discloses a photodetector in which a light chopper periodically transmits and blocks light, wherein a dark current cancelling circuit determines an approximate value of the dark current from the photodiode when the light is blocked and subtracts the mean value from the current signal fed into the integrated circuit. Further, a differential arithmetic circuit subtracts the remaining dark current from an output of the integrated circuit so that the remaining signal only comprises the signal current component.

US 2008/0203164 A1 describes a sample-and-hold circuit for operating the sensor for collecting light from a target in order to generate a data signal in a presence of ambient light during a sampling time period in which the sensor only collects the ambient light to generate an ambient signal. During a holding time period, the sensor collects both the ambient light and the light from the target to generate a composite signal comprised of the ambient signal and the data signal. Further provided is a subtracting circuit for subtracting the ambient signal from the composite signal to produce the data signal as an output.

US 4 341 956 A discloses a sample-and-hold feedback circuit being used to drive the dark current of a solid state photodiode to zero in the absence of incident light photons. The just previously attained compensation is then held during a subsequent quantitative measurement cycle when the photodiode is illuminated. Plural linear and/or non-linear signal processing stages may also be included within the feedback loop such that their normal offset errors may simultaneously be compensated.

Further methods and devices which are designed for a dark current compensation have been described in more documents, including US 4 657 384 A and JP H01-232886.

### Problem to be solved

It is therefore an objective of the present invention to overcome the above-mentioned problems and shortcomings which may occur in methods and/or devices according to the state of the art when attempting to extract a desired signal from a combined signal.

In particular, the present invention intends to provide a method and an apparatus which allow extracting a small desired signal superimposed by a high-dynamic interference level as an additional signal within a combined signal which comprises both the desired signal and the additional signal.

More particular, a method and an apparatus shall be provided which allow detecting very weak light signals which are dominated by ambient light having a magnitude exceeding the magnitude of the desired signal by more than one orders of magnitude. Hereby, the intensity of the ambient light cannot be predicted beforehand and the intensity of the ambient light may fluctuate over more than one order of magnitude and/or may be subject to stochastic or periodic variations, including but not limited to ripple effects caused by the mains supply. In addition, the desired signal may be superimposed by electric disturbances which may result from an electromagnetic coupling and/or a leakage. Hereby, similar phenomena may be observed during a detection of a weak light signal, such in light barriers or during distance measurements which employ light beams.

### Summary of the invention

This problem is solved by a method, an apparatus, and the use of an apparatus for extracting a desired signal from a combined signal with the features of the independent claims. Preferred embodiments which might be implemented in an isolated fashion or in any arbitrary combination are listed in the dependent claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

According to a first aspect of the present invention, a method for extracting a desired signal from a combined signal, which may also be denoted as a 'raw signal', is disclosed. As further used herein, the 'desired signal' describes an electrical signal or a signal which may be converted into an electrical signal which generally varies over time and which might provide information such as on the status of a technical, a physical, a chemical and/or a biological system and, alternatively or in addition, may comprise any other information inserted into the signal for any purpose, such as for a transmission of information.

According to the present invention, the desired signal is superimposed by an additional signal, whereby the additional signal and the desired signal together form the combined signal in a manner that the combined signal exhibits, at any point in time, a magnitude which comprises a sum of the magnitude of a desired signal and the magnitude of the additional signal. As further used herein, the term 'magnitude' describes the instantaneous value or intensity of the electrical signal, such as with respect to a voltage or a current, at a specific point in time. Consequently, the sum of two signals is acquired by adding the respective intensities of each signal at a specific point in time.

As further used herein, the additional signal may comprise fractions of static and/or time dependent, of predictable and/or non-predictable, of periodic and/or of non-periodic low and/or medium and/or high frequency components, which may be superimposed by any kind of noise, wherein 'noise' may be considered as random fluctuations within the additional signal, such as thermal noise, shot noise, or flicker noise. As an example, the additional signal may comprise a static, time-independent offset which may be superimposed by noise. In addition, the additional signal may comprise a transient component, wherein, according to the present invention, the 'transient component' may be considered as a signal which varies over time, such as a slowly fluctuating signal within the additional signal and/or with a signal varying with a frequency of a mains supply, e.g. due to an occurrence of ripple effects which may be caused by the mains supply.

As already mentioned above, the method and apparatus according to the present invention may preferably be applied in a case in which the magnitude of the additional signal at least temporarily exceeds the magnitude of the desired signal. In particular, the magnitude of the additional signal may exceed the magnitude of the desired signal by at least one order of magnitude, preferably by at least two, by at least three, by at least four, by at least five, or by at least six orders of magnitude. As further used herein, the 'order of magnitude' may be defined as a scale of numbers with a fixed ratio, preferentially rounded to the nearest power of ten. Particularly, in such a case, it may be obvious that some efforts are required to be able to extract the desired signal from the combined signal. As further used herein, 'extracting' the desired signal from the combined signal may comprise separating the instantaneous value of the desired signal from a preferentially substantial background formed by the additional signal as comprised within the combined signal.

In order to achieve this purpose, the method according to the present invention comprises step a) and step b), wherein step b) is performed after step a) or at least partially concurrently with step a). In particular, it is preferred to repeat step a) and step b) in this order at least once, preferentially several times, more preferentially consecutively after each other in this order. Herein, 'repeating' comprises performing each one of step a) and step b) in the manner as before, however, by using updated variables, such as the actual instantaneous value of the magnitude of the combined signal. Further, 'in this order' may comprise the fact that step b) is performed after step a) or at least partially concurrently with step a), whereas a subsequent step a) is performed after preceding step b) or at least partially concurrently with the preceding step b), preferentially in a plurality of cycles, wherein each cycle may comprise both steps a) and step b) in this order. Moreover, in addition to step a) and step b), additional steps which are not mentioned in the following may be performed.

According to step a), at least one value of the magnitude of the combined signal is stored within a time interval in a storage device as at least one stored value. As already mentioned, the at least one value of the magnitude of the combined signal returns the instantaneous intensity of the combined signal at a specific point in time. According to the present invention, at least one such value is stored in a storage device and further denominated as at least one stored value. Hereby, 'storing' may comprise keeping the at least one value in a suitable device for further reference and returning. According to the present invention, the at least one stored value comprises at least one value of the magnitude of the combined signal within at least one time interval. As further used herein, the at least one 'time interval' comprises a period of time in which the magnitude of the desired signal remains below a predefined threshold. Herein, the 'threshold' may comprise a value below which the desired signal may be considered as 'low' or 'off' or 'OFF'. Therefore, the time intervals may also be denoted as 'dark' intervals. Thus, within the at least one time interval, the desired signal may not contribute to the magnitude of the combined signal, which, therefore, may substantially only comprise the magnitude of the additional signal.

On the contrary, in a period outside the at least one time interval, the magnitude of the desired signal stays at least partially, i.e. temporarily, preferably predominantly, more preferably constantly, above the threshold, wherein the desired signal may be considered as 'high' or 'on' or 'ON'. Therefore, the periods outside the time intervals may also be denoted as 'light', 'bright', or 'illuminated' periods. Within this regard, it is, however, mentioned that, in the period outside the at least one time interval, the magnitude of the desired signal may comprise sub-periods during which the magnitude of the desired signal remains below the threshold, such as in a situation in which the combined signal may comprise bursts, wherein the bursts comprise a sequence of rapidly varying signals of the same frequency or of different frequency. As already mentioned above, the signal may, in addition or alternatively, comprise a further modulation introduced into the desired signal for any purpose, such as for the transmission of information, such as the number of a channel of a multi-channel measurement system or any other kind of data.

According to the present invention, it may be preferred to store exactly one value of the magnitude of the combined signal acquired within the time interval in the storage device. This embodiment is in contrast to the state of the art where a continuous acquisition of the magnitude of the combined signal is usually required. As will be described below in more detail, it may be preferable to store the value of the magnitude of the combined signal acquired in an instant before the end of the at least one time interval.

However, it may also be preferred to store more than one value of the magnitude of the combined signal acquired within the same time interval. Such a performance may particularly be preferred in a case wherein the time interval may have been chosen in a manner that the transient component comprised within the additional signal may show a substantial variation within the respective time interval. As will be explained further in more detail, the more than one values of the magnitude of the combined signal within the same time interval may allow for taking into account a transient component comprised within the additional signal. On the other hand, when the transient component within the additional signal may only be slowly fluctuating with respect to the time interval, it might be sufficient to store the at least one value of the magnitude of the combined signal within the storage device not during each consecutive time interval but only during selected time intervals, which may or may not be regularly chosen, such as every second time interval, every third time interval and so on. This kind of performance might, for example, be useful in an energy-saving operation of the apparatus according to the present invention.

According to step b), the at least one stored value as being stored in the storage device is subtracted from the magnitude of the combined signal. As further used herein, 'subtracting' may mean determining the difference between two values, such as between the instantaneous value of the magnitude of the combined signal as a minuend and the stored value acquired from the storage device as a subtrahend. In addition, 'subtracting' may further comprise inverting the value of the subtrahend and adding it to the value of the minuend, thereby determining the difference between the two values, too. By subtracting the stored value as the subtrahend from the instantaneous value of the magnitude of the combined signal acquired outside the time interval as the minuend, wherein the magnitude of the desired signal stays at least partially above the threshold, the magnitude of the desired signal is recovered and, in this manner, extracted from the combined signal.

In addition or alternatively, step b) may further comprise subtracting the stored value from the instantaneous value of the magnitude of the combined signal within the time interval, by which subtraction the difference signal is achieved that may be nearly zero and, thus, may be kept within the limiting levels as defined by the power supply. Consequently, it may be advantageous that the difference signal at the output of the subtracting device, by a suitable implementation of the present method, may exhibit a signal magnitude that might easily be amplified both within the at least one time interval but also in the periods outside the at least one time interval without any danger of coming close to the limiting levels after reasonable amplification.

According to the present invention, the stored value as being stored during step a) is copied from the storage device into which it was entered during step a) into a second storage device, wherein the copying may preferentially be performed during a subsequent step b). Within this particular embodiment, during a subsequent step a) and/or a subsequent step b), the stored value may be taken from the second storage device and subtracted from the magnitude of the combined signal. This manner of performance may particularly allow taking into account real parasitic properties of the electronic components actually used for constructing the respective storage devices. As further used herein, the term 'copying' may comprise taking a value from a first storage device, e.g. the storage device, and entering the same value into an other storage device, e.g. the second storage device, without altering the respective value during this procedure. In analog electronics, respective provisions may further be implemented in order to ascertain that the value in the other storage device may actually equal the value in the first storage device. Such provisions may include measures intended for avoiding an equal distribution of an amount of charge between the first storage device and the other storage device.

In a particularly preferred embodiment, the method according to the present invention may comprise a chopper modulation which may synchronize the magnitude of the desired signal with respect to the time interval in a manner that it consecutively remains below the threshold within the time interval. As further used herein, the 'chopper modulation' may comprise a procedure by which the signal is, preferably periodically, modulated. According to the present embodiment, the chopper modulation may preferably comprise a square wave, a trapezoidal wave, a sinusoidal wave, or a triangle wave, and may, moreover, further be modulated. Hereby, the kind of modulation may be chosen to ascertain that the magnitude of the desired signal consecutively remains below the threshold within the time interval, although outside the time interval bursts may occur during which the magnitude of the combined signal may also be below the threshold. Furthermore, the additional modulation of the chopper modulation may be used to transport any information which might be transmitted together with the chopper modulation, such as the number of a channel in a multi-channel measurement system or any other kind of data.

Furthermore, for the chopper modulation a repetition rate may be chosen, which may preferably exceed at least twice a highest frequency component which may be expected in at least one transient component within the additional signal or which may be required or intended to be filtered effectively by the particular application. As further used herein, the 'repetition rate' may describe a number of cycles of the chopper modulation within a time unit, such as a second. On the other hand, a lower repetition rate may also be possible, particularly, in a case in which transient components within the additional signal may at least partially be compensated by means as described below. Alternatively or in addition, it may also be possible to apply a high repetition rate but to disregard or to discard at least one value of the magnitude of the combined signal by not entering the at least one disregarded or discarded value in the storage device as a stored value.

In a further preferred embodiment of the present invention, at least two values of the magnitude of the combined signal within the at least one time interval, preferably from the same time interval or from two different time intervals, preferentially two consecutive time intervals, may additionally be stored within at least two additional storage devices as at least two additional values, wherein each of the at least two additional values may correspond to a different particular point in time. The term 'additionally' may mean that the at least two additional values are stored within at least two separate additional storage devices besides storing them into the storage device and/or the second storage device and/or any other storage device. For this purpose, the at least two values of the magnitude of the combined signal may be copied from the storage device and/or the second storage device into the at least two additional storage devices. Herein, the term 'copying' may refer to the procedure as described above. However, other ways of getting the at least two values of the magnitude of the combined signal for storing them as the at least two additional values within the at least two additional storage devices may be possible, too.

According to this embodiment, from an additional difference between the at least two additional values at least one correction value may be derived, wherein the 'additional difference' may comprise a difference and/or a variation between the at least two additional values. As an example, the at least one correction value may be determined by subtracting two additional values from each other. However, other procedures with regard to quantifying the additional difference between the two or more additional values may be applicable, such as calculating a slope and/or a curvature of the transient component. Within this regard it may be mentioned that calculating the curvature of the transient component may require three or more additional values. Herein, the respective procedures may be performed as part of a computer program, such as taking into account a first order, i.e. a linear, compensation but, preferably, a higher-order, i.e. a non-linear, compensation of the transient components, e.g. by performing suitable algorithms on a computing device.

The at least one correction value which may be derived by the procedure as described above may particularly be used for modifying the at least one value in the storage device and/or in the second storage device in a time-dependent manner. Hereby, 'modifying' may comprise applying the at least one correction value to the storage device and/or to the second storage device and, thereby, altering the at least one stored value as comprised therein. This procedure may allow taking into account the transient component comprised within the additional signal and/or variations of the transient component, thereby receiving a better approximation of the additional signal which may particularly be useful when extracting the desired signal from the combined signal.

In addition or alternatively, the at least one correction value may be used for determining a quality of the desired signal, upon which result a subsequent decision may be based. As an example, the correction value which may be equal to or near to a value of zero may thus indicate a high signal quality, whereas the correction value being far from the value zero, may, as a consequence of this result, subsequently lead to discarding the difference signal at the output of the subtracting device as a low quality signal. Alternatively, the difference signals at the output of the subtracting device may, for example, be equipped with a respective weight based on the quality of the desired signal when deriving averages. As a further example, the correction value may be used for adjusting the repetition rate of the chopper modulator, such as for selecting the repetition rate at which the corresponding correction value may produce a high signal quality. Furthermore, the at least one stored value in the storage device or in the second storage device and/or the at least two additional values within the additional storage devices and/or the magnitude of the difference signal at the output of the subtracting device, may, alternatively or in addition, be used for determining the quality of the desired signal.

In a further particularly preferred embodiment, the method according to the present invention may comprise amplifying the desired signal as acquired in step b). As already mentioned above, it may be advantageous for this purpose that the output of the subtracting device, by a suitable implementation of the present method, may provide a difference signal exhibiting a signal magnitude which may easily be amplified without interfering of the limiting level after reasonable amplification. In addition or alternatively, the method may further comprise filtering the desired signal as acquired in step b) with or without preceding amplifying. For this purpose, a filtering device, preferably a low-pass filter and/or a narrow-band filter, such as comprised in a lock-in device, may be applied. Alternatively and/or, preferably, in addition, the desired signal as acquired in step b) without or, preferably, with preceding amplifying and/or filtering, may be converted into a digital signal, such as for further processing of the digital signal. Within this particular embodiment, the preferred procedure comprises, first, amplifying the acquired signal, secondly, filtering the amplified signal, and, finally, converting the amplified filtered analog signal into a digital signal.

According to a further aspect of the present invention, an apparatus for extracting the desired signal from the combined signal is disclosed. Hereby, the apparatus is particularly adapted for performing the method as described above and/or below.

According to the present invention, the apparatus comprises a storage device for storing the at least one value acquired from the magnitude of the combined signal within the at least one time interval as the at least one stored value. Herein, the combined signal exhibits the magnitude which comprises the sum of the magnitude of the desired signal and the magnitude of the additional signal. According to the present invention, the magnitude of the desired signal remains below the threshold within the at least one time interval.

According to the present invention, the apparatus further comprises a subtracting device for subtracting the stored value from the magnitude of the combined signal. Hereby, the output of the subtracting device comprises a difference signal which is, outside the time interval, determined by the magnitude of the desired signal as being recovered by the apparatus according to the present invention. Herein, the magnitude of the desired signal stays, outside the time interval, at least partially above the threshold. On the other hand, within the time interval, wherein the magnitude of the desired signal remains below the threshold, the output of the subtracting device substantially comprises a difference signal which is, therefore, dominated by the noise of the additional signal. For the purposes of the present invention, the 'subtracting device' may comprise any electronic unit with at least two input ports, i.e. at least a minuend input port and a subtrahend input port, each providing a defined signal to the subtracting device, and at least one output port, which delivers a difference between the signals at the least two input ports at a specific time. In practice, for this purpose, at least one subtractor may be used or at least one combination of an inverter and an adder. In contrast to the subtractor, the adder adds two signals at a specific point of time. However, in order to achieve a subtracting performance, one of the signals which are provided to one input of the adder may before be inverted by an inverter, thereby achieving an inverted signal, wherein the inverted signal comprises the same absolute value but an opposite sign and may, thus, be used at one of the inputs of the adder. Consequently, the combination of the inverter and the adder may cause the same effect as the subtractor.

The apparatus may be implemented, alone or together with at least one further apparatus, by using discrete components on a suitable substrate, such as a printed circuit board (PCB). However, it may be preferably to employ an integrated circuit (IC), more preferably a monolithic integrated circuit, e.g. an application-specified integrated circuit (ASIC), in which at least one apparatus, preferably at least two apparatuses, may be comprised.

In a preferred embodiment, the apparatus may further comprise a chopper modulator for synchronizing the magnitude of the desired signal in a manner that it may remain below the threshold within the time interval. Chopper modulators suited for use in the present invention may comprise mechanical modulators, such as a chopper wheel, and/or electrical modulators, electro-optic modulators, and/or optical modulators. Herein, electro-optic modulators may comprise optical devices, wherein a signal-controlled element which exhibits the electro-optic effect may be employed to modulate a source of light, particularly with respect to the magnitude of the light.

According to the present invention, the main purpose of the chopper modulator may be to synchronize the magnitude of the desired signal with respect to the time interval in a manner that it consecutively remains below the threshold within the time interval. In order to achieve this purpose, it may be advantageous to arrange the chopper modulator between a signal source which emits the desired signal and the input of the apparatus, wherein, on its course to the input of the apparatus, the desired signal may be superimposed by the additional signal. Alternatively or additionally, the chopper modulator may be placed between a stimulator adapted for stimulating the emission of the desired signal from the signal source and the signal source itself. As further used herein, the 'signal source' may comprise any source which may emit the desired signal to be acquired according to the method and/or apparatus according to the present invention. Generally, the source may emit any kind of electromagnetic radiation, such as radio waves, microwaves, infrared-radiation, optical radiation, ultraviolet radiation and/or x-rays. Hereby, optical radiation, preferentially in the form of fluorescence signals, may be preferred. Alternatively, the method and apparatus according to the present invention may also be applicable to sources which may comprise electrostatic or magnetostatic fields or which may emit electrical charges and/or acoustic signals, including ultrasonic radiation. In a first embodiment, the source may be continuously emitting radiation, in which case it may be preferable to arrange the chopper modulator between the source and the input of the apparatus as described above. In an alternative embodiment, the source may only emit radiation upon stimulation by an external stimulator. A particular example for this embodiment may comprise a stimulated emission of radiation, such as a fluorescent signal, from the source. This kind of stimulated emission may for example be activated by application of a light-emitting diode or a laser beam which may be adapted for this purpose and which may be modulated by using the chopper modulation.

Preferably in order to synchronize the magnitude of the desired signal in a manner that it remains below the threshold within a number of successive time intervals, a control unit may further be provided for controlling the operation of the storage device with respect to the frequency of the chopper modulation. As a preferred example, the storage device may comprise at least one controllable switch which may be set to 'on' ('high') or to 'off' ('low') by the control unit in order to synchronize the storing of the stored value within the storage device with the repetition rate of the chopper modulation. The control unit may further be employed to synchronize at least one other part of the apparatus with respect to the frequency of the chopper modulation, such as at least one further controllable switch provided for controlling the storage device, the second storage device, at least one of the additional storage devices, and/or other devices as described above and/or below.

The apparatus according to the present invention further comprises a splitter for guiding the combined signal along at least one first signal path and along at least one second signal path. As further used herein, the 'splitter' may comprise a passive device with one input port, in which a signal may be fed in, and at least two output ports, wherein each of the output ports may comprise the same signal as fed into the input port. Within this regard, the sum of the magnitudes of the output signal may be equal to the magnitude of the input signal plus a loss within the splitter. However, means may be provided to compensate this fact in a manner that the magnitude of each output signal may be equal to the magnitude of the input signal. In addition, prior to feeding it into the input port of the splitter, the combined signal may first be amplified, for example in analog electronics by employing an additional amplifier such as a transimpedance amplifier (TIA). Furthermore, in an event that the combined signal may, prior to feeding it into the input port of the splitter and/or an additional amplifier, may comprise a non-electrical signal, the combined signal may first be converted into an electrical signal. As an example, a photodiode may be used for converting an incoming light signal into the electrical signal as required for further signal conditioning with the present apparatus.

According to the present invention, the first signal path may be distinguished from the second signal path by the fact that the storage device may be arranged along the first signal path, whereas the second signal path, which may also be denoted as a 'reference path' or 'raw path', may preferably guide the combined signal directly into an input of the subtracting device. As explained above, another input of the subtracting device may receive the stored value as supplied by the first signal path. This particular embodiment may ascertain that in the subtracting device, the stored value as provided by the first signal path may be actually subtracted from the magnitude of the combined signal as provided by the second signal path without any further disturbances.

Further according to the present invention, the at least one first signal path further comprises a second storage device for storing at least one value acquired from the magnitude of the combined signal. Furthermore a copying device is provided which allows copying the stored value from the storage device as described above into the second storage device. This feature may allow for storing a new value acquired from the magnitude of the combined signal in the storage device whereas the second storage device may still keep the original value as previously acquired. Herein, the operation of the second storage device may preferably be controlled by the control unit which may already control the operation of the storage device.

In a particularly preferred embodiment, the storage device and/or the second storage device as well as at the least two additional storage devices as described below may comprise a sample-and-hold circuit. As further used herein, the 'sample-and-hold circuit' comprises an analog device being adapted for sampling the magnitude of a signal and holding its value at a constant level for a specific period of time. As an example, the sample-and-hold circuit may comprise a capacitor in which electric charge may be stored, at least one switch for commencing and/or finishing the sampling procedure, and at least one operational amplifier which may be used as a buffer between the capacitor and the output of the sample-and-hold circuit in order to ensure that the charge of the capacitor may be influenced by an output load as little as possible. With respect to the present invention, in a 'basic version', one sample-and-hold circuit may be provided for storing one stored value of the magnitude of the combined signal. In a further embodiment, in an 'extended version', two consecutive sample-and-hold circuits may be provided, wherein the sample-and-hold circuit arranged as the second sample-and-hold circuit in a line may work as the second storage device which receives the stored value by copying from the first sample-and-hold device which may act as the storage device according to the present invention.

In a further preferred embodiment, the apparatus may further comprise at least two additional storage devices, being different from the above mentioned storage device and second storage device, for additionally storing at least two additional values of the magnitude of the combined signal within the at least one time interval. In a particularly preferred embodiment, the at least two additional storage devices may exhibit the same or a similar size since such a dimensioning of the at least two additional storage devices may allow an easier evaluation when applying the at least two additional values for a further purpose. Preferably, the two additional values of the magnitude of the combined signal may comprise two values of the magnitude of the combined signal which may be consecutively acquired within the same time interval or within two consecutive time intervals.

According to the present invention, from the additional difference between the at least two additional values at least one correction value may be derived by suitable means, such as by a transient compensation unit which will be described below in more detail. Hereby, the at least one correction value may be employed for modifying at least one value within the storage device and/or the second storage device in a time-dependent manner. This embodiment may be particularly suited for applications under circumstances where the additional signal may comprise strong transition components. As already used herein, 'modifying' may comprise applying the at least one correction value to the storage device and/or to the second storage device and, thereby, altering the at least one value as comprised therein. In a particularly preferred embodiment, a correction value generator may provide the at least one correction value in form of a current, wherein the current, within a time span as defined by an additional switch, may provide a charge that may alter the voltage of a capacitor as comprised within the storage device and/or the second storage device.

In a further preferred embodiment, the apparatus according to the present invention may further comprise an amplifier for amplifying the desired signal, and/or a filtering device for filtering the desired signal, and/or an analog-to-digital converter for converting the desired signal into a digital signal. Herein, the amplifier, the filtering device, and the analog-to-digital converter are arranged preferably in the given order after the subtracting device, wherein the input of the amplifier may receive the output from the subtracting device. Consequently, the input of the filtering device may receive the output of the amplifier and the input of the analog-to-digital converter may receive the output of the filtering device. In a particularly preferred embodiment, the filtering device may comprise a low-pass filter, a narrow-band filter, and/or a lock-in device as described above.

For further details regarding the apparatus, reference may be made to the disclosure of the method, as described above and/or below.

According to another aspect of the present invention, the use of the apparatus for acquiring a magnitude of a desired signal as described above and/or below is disclosed. The apparatus may, thus, be used for extracting a desired signal which comprises an electrical and/or an electromagnetic signal, preferably a light signal, more preferably a fluorescent signal, in a situation wherein the desired signal may be superimposed by an additional signal. Preferably, the additional signal may be influenced by ambient conditions, in particular by ambient light. Herein, 'ambient light' may refer to any source of light which may not be supplied by the source for the purpose of providing the desired signal, such as natural sources of light, e.g. the sun, explosions or lightning, or any reflected light, or artificial sources of light in-door or out-door. As a preferred example, the apparatus according to the present invention may be used for acquiring the magnitude of a signal provided by a sensor element, such as a sensor element implanted in any part of the body, particularly below the outermost layer of the skin, where the desired signal may still largely be superimposed by the additional signal as provided by the presence of ambient light.

According to another aspect of the present invention, the use of the apparatus according to the present invention for acquiring a magnitude of a desired signal and/or of information as comprised within the desired signal, wherein the desired signal transports the information, is described. Herein, the desired signal may comprise an electrical and/or an electromagnetic signal, preferably a light signal. As further used herein, the term 'information' refers to any kind of data, such as in analog or digital form, which are superimposed onto the desired signal, wherein the rate with which the information may be encoded within the desired signal may exceed the repetition rate of the chopper modulation. As described above and/or below, the desired signal is superimposed by the additional signal, wherein the additional signal may be preferably influenced by ambient conditions, in particular by ambient radiation, more particular by ambient light.

### Short description of the Figures

Further optional features and embodiments of the invention will be disclosed in more detail in the subsequent description of preferred embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows a schematic voltage versus time diagram of an example of a combined signal comprising a small pulsed desired signal superimposed on a large offset as additional signal a) at the input, and b) with an amplification factor of 5 wherein the level of the amplified combined signal partially exceeds a limiting level as defined by the supply voltage;
- Figure 2: exhibits a voltage versus time diagram of a combined signal, wherein the combined signal comprises a pulsed desired signal superimposed by an additional signal with a dynamic interference level caused by a slowly varying transient component;
- Figure 3: displays two preferred arrangements of a chopper modulator with respect to the signal source and the input into the apparatus, a), wherein the chopper modulator directly modulates the output of the signal source, or b), wherein the chopper modulator modulates a stimulating signal provided by an external stimulator which functions as input into the signal source;
- Figure 4: schematically depicts a) a block diagram and b) a simplified electrical example of a basic version as a first preferred embodiment of the apparatus according to the present invention;
- Figure 5: schematically shows a) a block diagram and b) a simplified electrical example of an extended version as a second preferred embodiment of the apparatus according to the present invention;
- Figure 6: exhibits signal-timing diagrams with respect to the extended version of a) the combined signal at the input of the apparatus, b) the storage device, c) the second storage device, and d) of the signal at the output of the subtracting device;
- Figure 7: schematically displays a) a block diagram and b) a simplified electrical example of the extended version additionally being provided with means for transient compensation.

### Detailed description of the embodiments

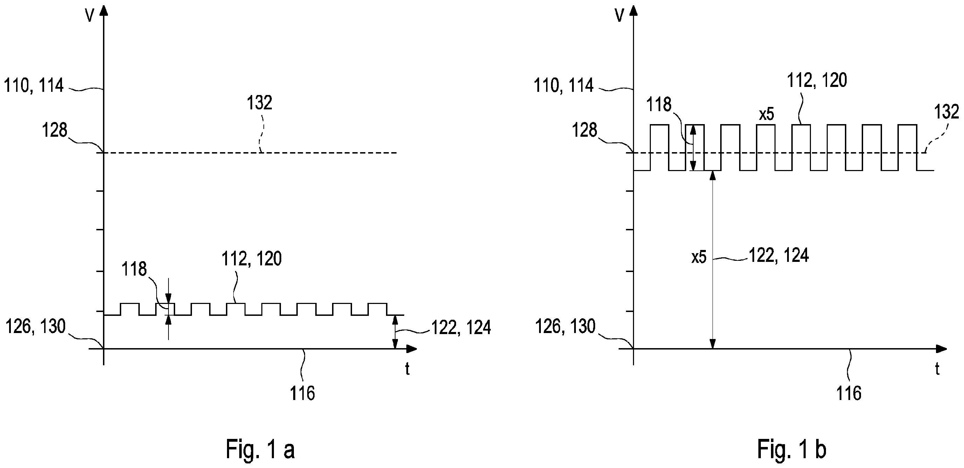

Figure 1 schematically depicts a situation in which an application of the method and the apparatus according to the present invention would overcome the problems involved. As a typical example, in Figure 1 a) a magnitude 110 of a combined signal 112 is shown as a voltage 114 versus time 116. Herein, the combined signal 112 exhibits the magnitude 110 which comprises the sum of the magnitude 110 of a desired signal 118 and the magnitude 110 of an additional signal 122, wherein the desired signal 118 varies over time 116 in a form of a square wave 120, and wherein the additional signal 122 forms an offset 124 above the ground 126 of a supply voltage 128 being constant over time 116. In this example, the value of the supply voltage 128 and the value of the ground 126 constitute a lower limiting level 130 and an upper limiting level 132, between which the voltage 114 of the combined signal 112 may vary.

The limiting levels 130, 132, also denoted as 'supply rails', may, as schematically depicted in Figure 1 b), cause a limiting of any signal which may fall below the lower limiting level 130 as well as of any signal which may exceed the upper limiting level 132. In Figure 1b), the combined signal 112, as an example, has been amplified by a factor of 5 with regard to the combined signal 112 as shown in Figure 1 a). Hereby, the amplification with a factor of 5 affects both the desired signal 118 and the additional signal 122. For illustrative purposes, the magnification in this example is intentionally chosen in a manner that the magnitude 110 of the additional signal 122, which comprises a timely constant offset 124, may still be found within the limiting levels 130, 132. However, the simultaneously amplified desired signal 118, although exhibiting a much lower magnitude 110 compared with the additional signal 124, may partially be limited by the upper limiting level 132 of the supply voltage 128. Consequently, the desired signal 118 is effectively lost where its magnitude would exceed the upper limiting level 132. From this example it may be obvious that choosing the amplification with a factor larger than 5 will result in a complete limiting of the combined signal 112 by the upper limiting level 132. On the other hand, amplifications with smaller amplification factors may not be sufficient to separate the desired signal 118 from the combined signal 112, particularly in case the magnitude 110 of the additional signal 122 considerably exceeds the magnitude 110 of the desired signal 118.

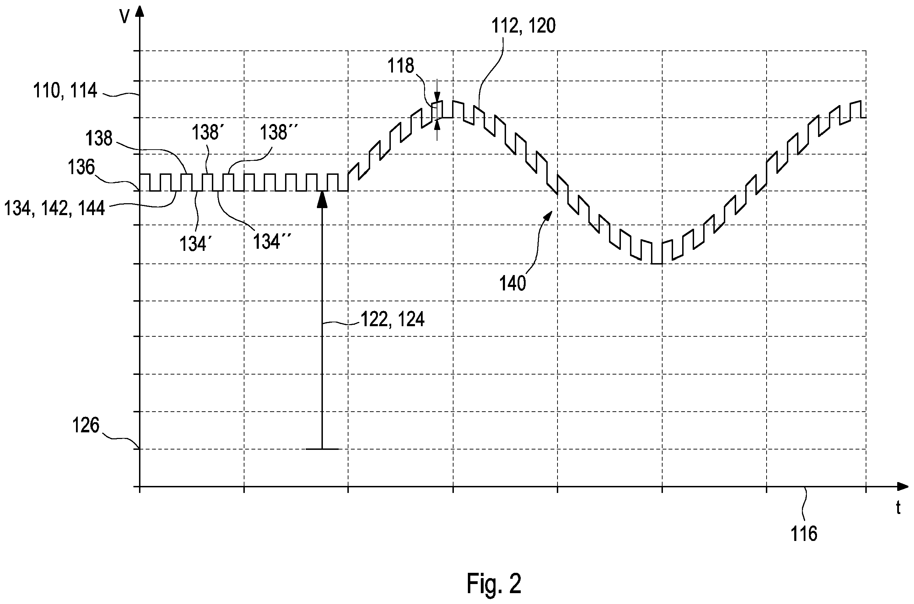

The basis of the solution according to the present invention is schematically depicted in Figure 2. Within a time interval 134, the magnitude 110 of the desired signal 118 will remain below a threshold 136, whereas the magnitude 110 of the desired signal 118 stays at least partially above the threshold 136 in a period 138 outside the time interval 134. In the example as presented in Figure 2, the magnitude 110 of the desired signal 118 varies in the form of a square wave 120, however, any other kind of variation of the desired signal 118 over time 116 between the at least one time interval 134 and the at least one period 138 outside the time interval 134 may be applicable. The desired signal 118 is superimposed by an additional signal 122, wherein the magnitude 110 of the additional signal 122 largely exceeds the magnitude 110 of the desired signal 118. In this example, the additional signal 122 further comprises a time constant offset 124 being additionally superimposed by at least one transient component 140 varying over the time 116, however, being much lower than the repetition rate 142 of a chopper modulation 144 which consecutively chops the desired signal 118 along a sequence of repetitive time intervals 134.

This arrangement, however, may open the way for extracting the desired signal 118 from the combined signal 112 by subtracting the value of the magnitude 110 of the combined signal 112 within the time intervals 134, 134', 134", wherein the combined signal 112 essentially equals the magnitude 110 of the additional signal 122, from the magnitude 110 of the combined signal 112 in one or more periods 138, 138', 138" outside each of the preceding time intervals 134, 134', 134". Hereby, it is explicitly mentioned that this kind of procedure actually provides the magnitude 110 of the desired signal 118, however, only as long as the additional signal 122 is constant over time 116. Any time varying component, such as the transient component 140, comprised within the additional signal 122 may reduce the accuracy of this procedure and deliver distorted results, depending on the time and extent of the variation of the additional signal 122 with time 116.

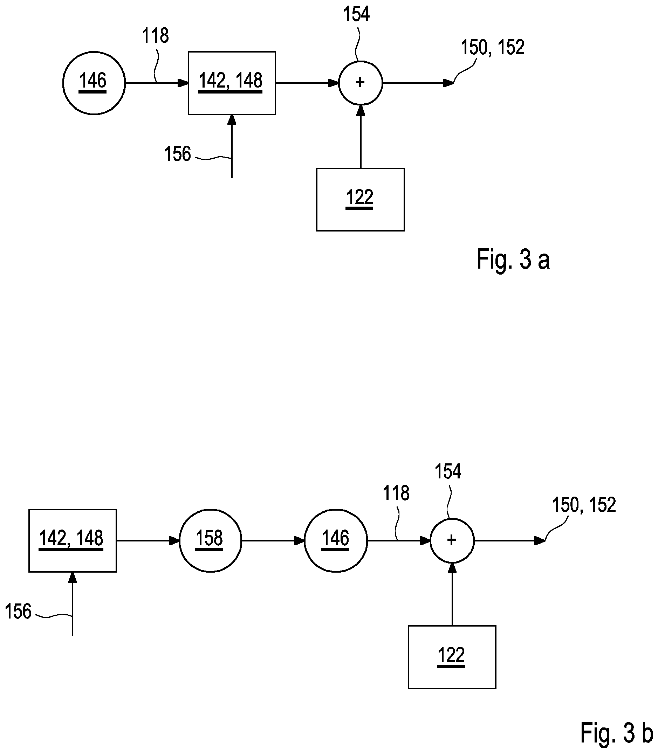

Figure 3 shows two preferred examples for providing a chopper modulation 144 to the desired signal 118. According to Figure 3 a), the desired signal 118 which may be emitted, for example, as light by a signal source 146 may be modified by a chopper modulator 148 until it reaches the input 150 of the apparatus 152 of the present invention. A chopper wheel may be chosen as the chopper modulator 148 which may periodically interrupt the light emitted by the signal source 146, wherein respective interruption periods may correspond to the time intervals 134, wherein the magnitude 110 of the desired signal 118 remains below the threshold 136. On the contrary, in the periods 138 outside the time intervals 134 the chopper wheel may allow the light emitted by the signal source 146 to pass in order to impinge a suitable optical sensor located at the input 150. On its course between the chopper modulator 148 and the input 150 of the apparatus 152, the desired signal 118 may be influenced by the additional signal 122, e.g. by ambient light, which means that the input 150 not only receives the desired signal 118 but a combined signal 112, wherein the combined signal 112 exhibits a magnitude 110 which comprises a sum 154 of the magnitude 110 of the desired signal 118 and the magnitude 110 of the additional signal 122. Preferably, the chopper modulator 148 is connected to a control unit 156 adapted to synchronize the repetition rate 142 of the chopper modulator 148 and an operation of switches comprised within the apparatus 152. In the example wherein the desired signal 118 may be an optical signal, the chopper modulator 148 may be chosen as a chopper wheel and/or as an electro-optic modulator.

Figure 3 b) refers to a different situation, in which the signal source 146 only emits the desired signal 118 upon a stimulation by a stimulator 158. A preferred example for this embodiment may be the emission of fluorescence light by the signal light source 146 which may only occur upon stimulation of the signal source 146 by a suitable stimulator 158, such as light emitted by a laser or a light-emitting diode. In this event, it may, however, be suitable to locate the chopper modulator 148 at the same position as depicted in Figure 3 a) between the signal source 146 and the input 150 of the apparatus 152.

As depicted in Figure 3 b), it might, however, alternatively or in addition, be preferred to locate the chopper modulator 148 at a place where it may activate the stimulator 158 in a manner that the stimulator 158, such as a light emitting diode, may only stimulate the signal source 146 in order to emit the desired signal 118 in the periods 138 outside the time intervals 134, wherein the signal source 146 may be impinged by the light as emitted by the stimulator 158, e.g. for stimulating the emission of the fluorescence light within the signal source 146, wherein the fluorescence light may constitute the desired signal 118.

Further, alternatively or in addition, it might otherwise be preferable to place the chopper modulator 148 between the stimulator 158 and the signal source 146. This embodiment (which is not depicted here) may mean that the light emitting diode may constantly emit light which may only impinge the signal source 146 at a corresponding position of the chopper modulator 148. A chopper wheel which may be chosen as the chopper modulator 148 may, thus, periodically interrupt the light emitted by the stimulator 158, wherein respective interruption periods may correspond to the time intervals 134, wherein the magnitude 110 of the desired signal 118 may remain below the threshold 136. On the contrary, in the periods 138 outside the time intervals 134 the chopper wheel may allow the light emitted by the stimulator 158 passing through the chopper modulator 148 in order to impinge the signal source 146, e.g. for stimulating the emission of the fluorescence light within the signal source 146, wherein the fluorescence light may constitute the desired signal 118.

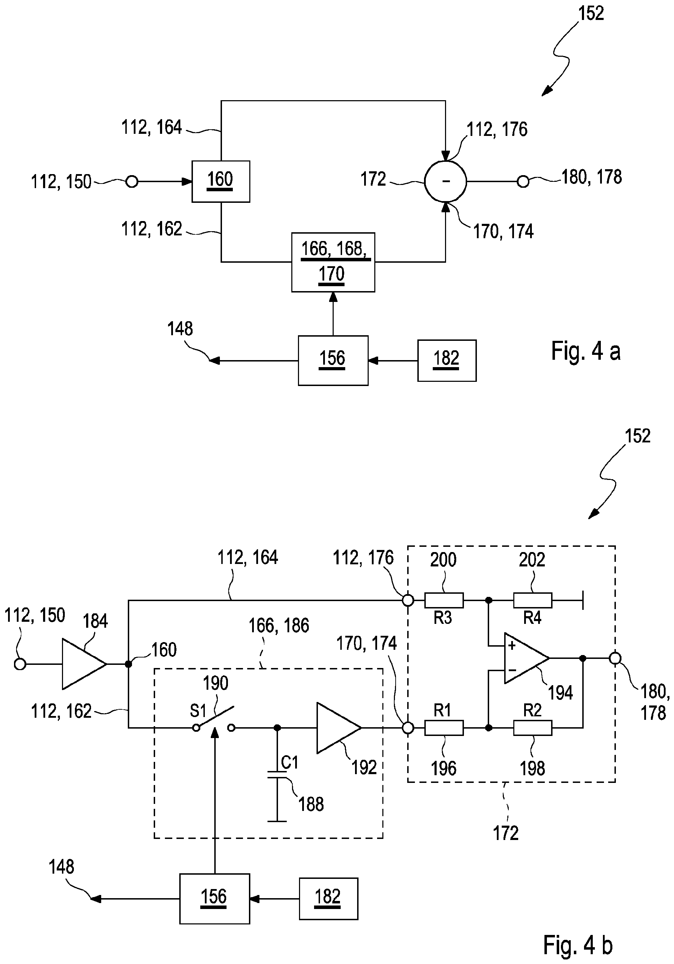

Figure 4 a) schematically depicts a so-called 'basic version' as a first embodiment of an apparatus 152 according to the present invention. Herein, the apparatus 152 may receive the combined signal 112 through the input 150. Thereafter, the combined signal 112 may impinge a splitter 160, wherein the splitter 160 may be configured for guiding the combined signal 112 along at least one first signal path 162 and along at least one second signal path 164. Herein, the first signal path 162 may comprise a storage device 166 being configured for storing at least one value 168 acquired from the magnitude 110 of the combined signal 112 within at least one time interval 134, 134', 134" as at least one stored value 170, 170', 170". According to the present invention, the apparatus 152 further comprises a subtracting device 172 which may have two inputs 174, 176, wherein the subtrahend input 174 may receive the stored value 170 as supplied by the first signal path 162 and the minuend input 176 of the subtracting device 172 may receive the magnitude 110 of the combined signal 112 itself as provided by the second signal path 164. The subtracting device 172 may be configured for subtracting the stored value 170 from the magnitude 110 of the combined signal 112 and for providing a respective difference signal 178 at the output 180 of the subtracting device 172. In the period 138, 138', 138" outside the time interval 134, 134', 134", thus, the magnitude 110 of the difference signal 178 equals to the magnitude 110 of the desired signal 118 as long as the magnitude 110 of the desired signal 118 stays at least partially above the threshold 136 during the period 138, 13', 138". The storage device 166 may be further connected to the control unit 156 which synchronizes the chopper modulation 144 of the chopper modulator 148 with the operation of the storage device 166. For this purpose, a clock generator 182 may be provided for a respective support of the control unit 156.

Figure 4 b) schematically depicts the basic version in form of a simplified electrical setup. Herein, the input 150 of the apparatus 152 may receive the combined signal 112, which may be amplified in an input amplifier 184 until splitted for being guided along the first signal path 162 as well as along the second signal path 164. Herein, the input amplifier 184 may be a part of the splitter 160 or form a separate device. In contrast to the presentation in Figure 4 a), the storage device 166 is described here in more detail. In this example, the storage device 166 may be a sample-and-hold circuit 186 which may comprise a capacitor 188 (C1), a switch 190 (S1), and a buffer 192. When the control unit 156, which may be connected to both the chopper modulator 148 and the switch 190, may provide for closing the switch 190 of the storage device 166, during the time interval 134, 134', 134", the value 168 of the magnitude 110 of the combined signal 112 may be sampled and stored within the capacitor 188 (C1) of the storage device 166 as the stored value 170, 170', 170". The stored value 170, 170', 170" may then be buffered by a buffer 192 before it may be received by the subtrahend input 174 of the subtracting device 172. The subtracting device 172 may comprise a differential amplifier 194 and four resistors 196, 198, 200, 202 (R1, R2, R3, R4). The stored value 170 as received by the subtrahend input 174 of the subtracting device 172 may then be subtracted from the magnitude 110 of the combined signal 112 as received by the minuend input 176 of the subtracting device, and this difference signal 178 may be available at the output 180 of the subtracting device 172. Preferably, the capacitor 188 (C1) may be adapted to keep its voltage 114 in a first approximation over a period 138, 138', 138" outside the time intervals 134, 134', 134". Consequently, at a period 138, 138', 138" outside the time intervals 134, 134', 134" the magnitude 110 of the additional signal 122 may be subtracted from the magnitude of the combined signal 112, which comprises the additional signal 112 and the desired signal 118. As a result, only the relatively small desired signal 118 may be acquired in a first approximation.

The signal provided at the output 180 of the subtracting device 172 may be still a pulsed signal but may comprise a considerably reduced offset level 124. As a result, the desired signal 118 may now be amplified without the problems as schematically depicted in Figure 1. Preferably thereafter, the amplified signal may be additionally filtered and, subsequently, converted into a digital signal.

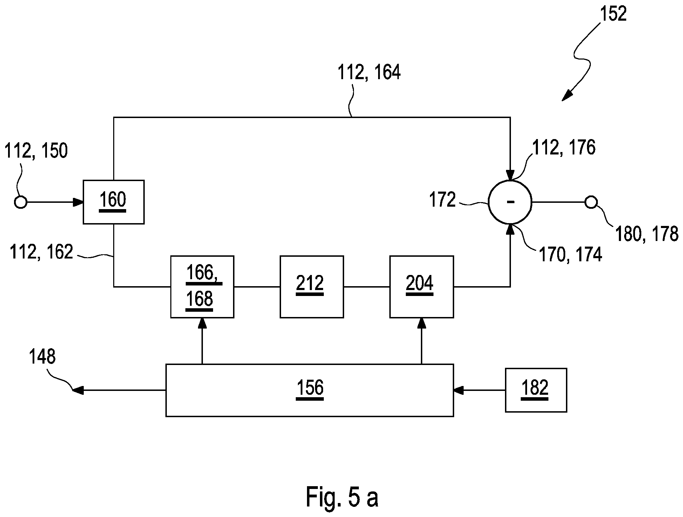

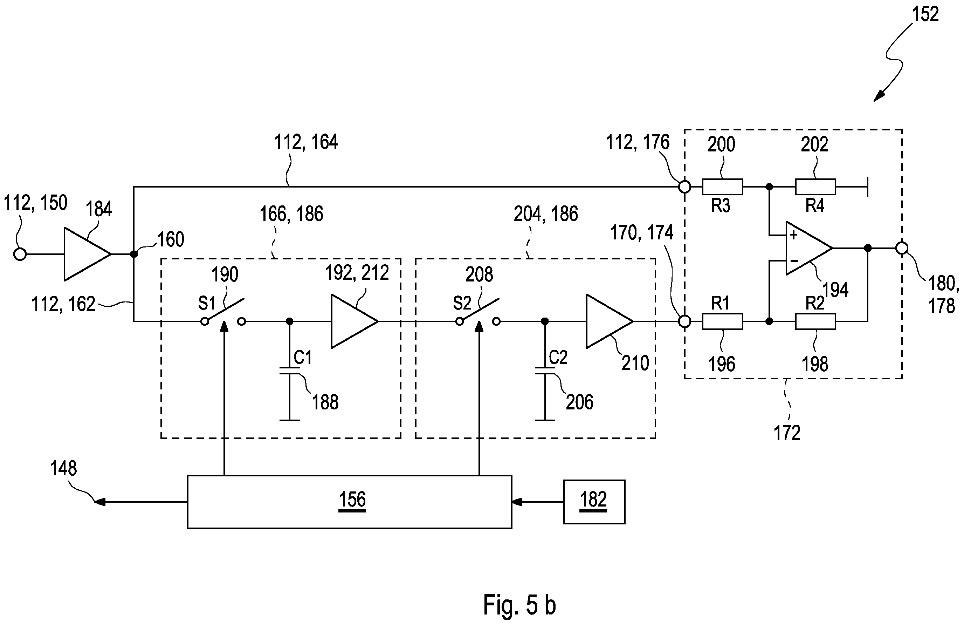

Figure 5 a) schematically displays a block diagram of a so-called 'extended version' as a second preferred embodiment according to the present invention. In addition to the basic version as presented in Figure 4, the extended version additionally comprises a second storage device 204, which again may have a second capacitor 206, a second controllable switch 208, and a second buffer 210, i.e. all elements which may classify it as a sample-and-hold circuit 186. In addition, the control unit 156 may also be connected to the second switch 208.

Whereas, as shown in Figure 5 b), the first switch 190 may be closed during the time interval 134, the control unit 156 may instruct the second switch 208 to close during the periods 138, 138', 138" outside the time intervals 134, 134', 134". Closing the second switch 208 may also cause copying the stored value 170, 170', 170" via the buffer 192 which simultaneously may act as a copying device 212, from the storage device 166 to the second storage device 204. The stored value 170, 170', 170" may then be transferred from the second storage device 204 into the subtrahend input 174 of the subtracting device 172. Using two sample-and-hold circuits 186 as storage device 166 and a second storage device 204, respectively, may have the advantage that smaller capacitors may be sufficient and/or parasitic effects of the components may be managed easier. Also, this arrangement of two sample-and-hold circuits 186 in the extended version may allow taking into account faster variations within the transient component 140 of the additional signal 122. Owing to the finite speed of real switches and to the parasitic effects of real components, it may be preferred to avoid that both switches may be conducting at the same time and to carefully adapt the timing of the two switches 190, 208.

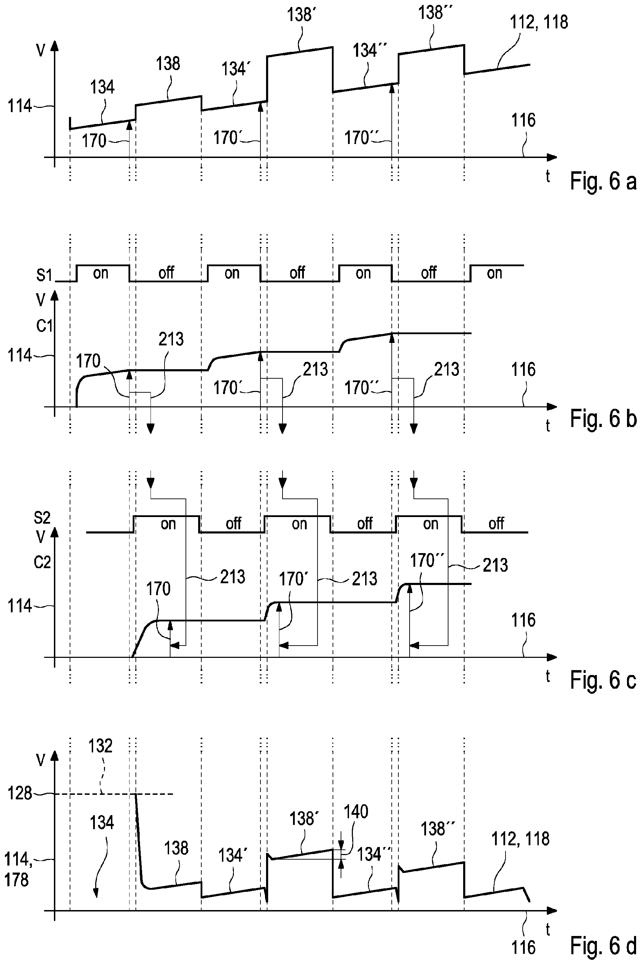

Figure 6 presents signal-timing diagrams which schematically illustrate the situation at different points within the setup according to the extended version as presented in Figure 5.

As an example, Figure 6 a) shows the timing diagram of a combined signal 112 over a number of consecutive time intervals 134, 134', 134" which may be interrupted by periods 138, 138', 138" outside the time intervals 134, 134', 134". Within each time interval 134, wherein the magnitude 110 of the desired signal 118 remains below a threshold 136, the combined signal is more or less identical to the additional signal 122. In contrast with this, during the periods 138, 138', 138" outside the time intervals 134, 134', 134", the combined signal 112 comprises both the additional signal 122 and the desired signal 118.

Figure 6 b) describes the same situation as it may be observed within the storage device 166. As described above, the switch 190 (S1) may be closed shortly after the beginning of each time interval 134, 134', 134" and will be opened shortly before the end of each time interval 134, 134', 134". In a moment before the switch 190 (S1) may be opened, the instantaneous magnitude 110 of the combined signal 112 may be stored as a stored value 170, 170', 170" in the capacitor 188 (C1) of the storage device 166 and kept until the switch 190 (S1) will be closed again in the subsequent time period 134', 134", ....

As schematically presented in Figure 6 c), the control unit 156 may ensure that the second switch 208 (S2) of the second storage device 204 may be closed not before the first switch 190 (S1) of the storage device 166 may have reached an opened state. This procedure may lead to a copying 213 of the stored value 170, 170', 170" from the capacitor 188 in the storage device to the second capacitor 206 in the second storage device 204 by means of the buffer 192 which may act as the copying device 212. In order to keep the stored value 170, 170', 170" within the second storage device, the second switch 208 (S2) may preferably have reached an opened state before the switch 190 (S1) of the storage device 166 may start to become closed again. At the same time, after closing the second switch 208 (S2), the stored value 170, 170', 170" may now be available to the subtrahend input 174 of the subtracting device 172. This may allow subtracting the stored value 170, 170', 170" from the instantaneous magnitude 110 of the combined signal 112 in the subtracting device 172. Thereby, a predominant part of the additional signal 122 within the combined signal 112 may be compensated in order to deliver the magnitude 110 of the desired signal, apart from transient components 140 comprised within the additional signal 122.

Finally, Figure 6 d) schematically depicts the voltage 114 of the difference signal 178 being available at the output 180 of the subtracting device 172. As shown within the first time interval 134, prior to the full operation of the apparatus according to the present invention, the resulting difference signal 178 may exceed the upper limiting level 132 with respect to the supply voltage 128. In such a case, the control unit 156 may inhibit the output of the subtracting device 172 and/or provide a suitable flag indicating that the output may be expected to provide an invalid signal. In the following course, the subsequent time intervals 134', 134" ..., the magnitude 110 of the difference signal 178 may reflect the magnitude 110 of the desired signal 118 to a large extent. Depending on a particular set-up of the apparatus 152, a number of spikes may still reflect the finite transient response time of the apparatus 152. However, choosing right dimensions for the components of the real apparatus in order to meet relevant tolerances for a certain application, may overcome such effects. In addition, a transient component 140 which may not be fully compensated by the particular set-up of the apparatus 152 may emerge in a form of a small additional saw-tooth voltage that may be superimposed onto the magnitude 110 of the desired signal 118 versus time 116.

However, the additional signal 122 may comprise strong transient components 140, which may mean that both the basic version and the extended version of the present invention may exhibit a distortion at the output 180 of the subtracting device 172 which may comprise the form of a saw tooth. In some cases it might, therefore, be preferable to increase the repetition rate 142 of the chopper modulation 144 in order to reduce the remaining transient component 140 between the two consecutive time intervals 134, 134'.

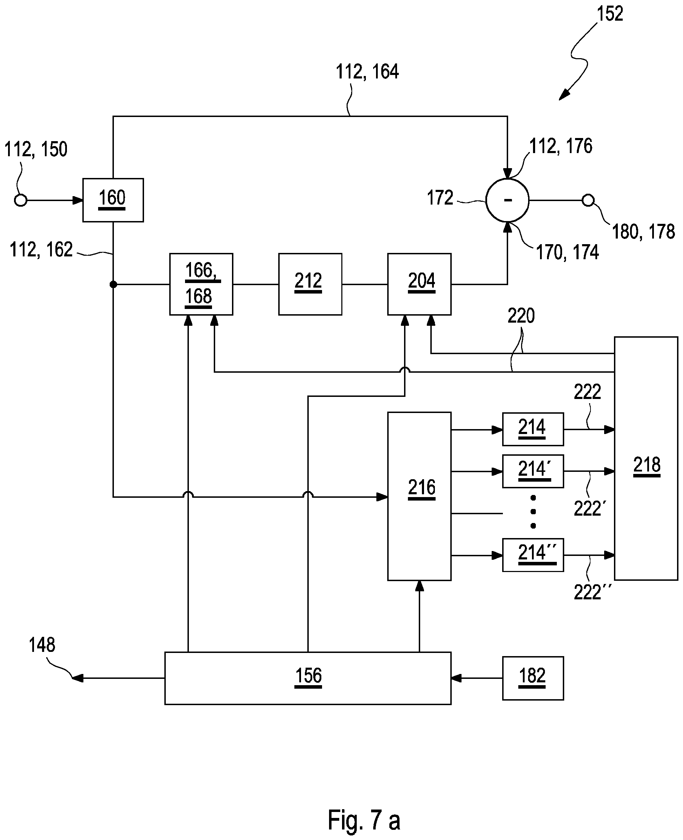

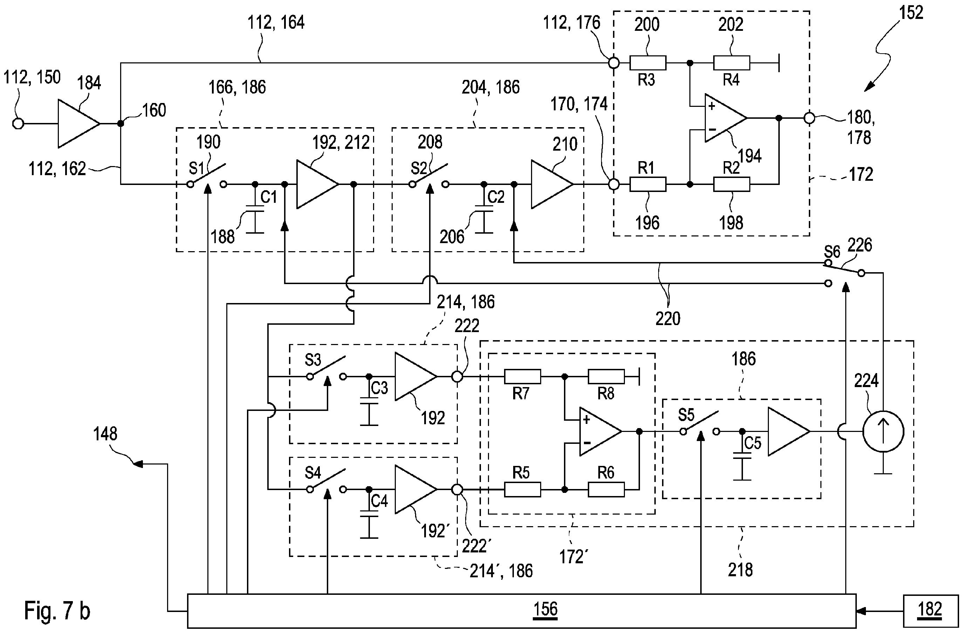

In other cases it might, however, not be possible or preferable to increase the repetition rate 142 of the chopper modulation 144 for various reasons. In this case, the extended version with included transient compensation, as schematically shown in Figure 7, may be advantageously employed. In addition to the extended version without transient compensation as presented in Figures 5 and 6, the apparatus 152 according to the present invention may further comprise at least two different additional storage devices 214, 214', 214". A distributor 216 being controlled by the control unit 156 may receive the combined signal 112 and distribute it to the additional storage devices 214, 214', 214". A correction value generator 218 may derive at least one correction value 220 from a difference between at least two additional values 222, 222', 222", wherein the at least one correction value 220 may be available to at least one of the storage device 166 and the second storage device 204, preferably for both the storage device 166 and the second storage device 204. As long as the transient component 140 may be present within the additional signal 122 during the time interval 134, 134', 134", the additional values 222, 222', 222" may vary from each other, thus leading to an observation that the at least one correction value 220 may be different from a value of zero.

Figure 7 b) finally shows a simplified electrical setup for the extended version with transient compensation as a third preferred embodiment of the present invention. As previously, both the storage device 166 and the second storage device 204 may each be accomplished as a sample-and-hold circuit 186. In addition, the additional storage devices 214, 214' may equally be accomplished as sample-and-hold circuits 186, each comprising a capacitor (C3 or C4), a switch (S3 or S4) and a buffer 192, 192'. The signals stored in the capacitors C3, C4 may be copied by the buffers 192, 192' as additional values 222, 222' by the correction value generator 218. The correction value generator 218 may comprise a further subtracting device 172', a further sample-and-hold circuit 186, and a controlled current source 224, wherein the controlled current source 224 may receive the output of the sample-and-hold circuit 186 within the correction value generator 218. Hereby, the controlled current source 224 may have a high impedance output which may be configured for driving a current, whose value may be correlated to a voltage input or to a current input.

In this particular embodiment, the output current of the controlled current source 224 may alternatingly be guided to the storage device 166 or to the second storage device 204 by application of an additional switch 226. Again, the switches S3, S4 within the additional storage devices 214, 214', the further switch S5, and the additional switch 226 (S6) may be controlled by the control unit 156, thus allowing a carefully adapted timing. Preferably, during the time intervals 134, 134', 134", the additional switch 226 may guide the output current of the controlled current source 224, thus providing an additional charge, into the second capacitor 206 of the second storage device 204, whereas in the periods 138, 138', 138"outside the time interval 134, 134', 134", the additional switch 226 may guide the output current of the controlled current source 224, thus providing an additional charge, into the capacitor 188 of the storage device 166. Consequently, the embodiment as schematically depicted in Figure 7 may, thus, allow compensating, to a large extent, a transient component 140 of the additional signal 122 by which the magnitude 110 of the additional signal 122 may differ between a time interval 134 and a subsequent time interval 134'.

In an alternative embodiment (not depicted here), instead of using a single controlled current source 224 whose output current may alternatingly be guided by application of an additional switch 226 to either the capacitor 188 of the storage device 166 or to the second capacitor 206 of the second storage device 204, two separate controlled current sources may be employed, each of which may provide an additional charge which may be guided by the control unit 156 either to the capacitor 188 of the storage device 166 or to the second capacitor 206 of the second storage device 204.

It may be mentioned here the setup as shown in Figure 7 b) may be employed for the linear correction of the transient components 140 and may, thus, only require two additional storage devices 214, 214' for storing two additional values 222, 222'. However, in order to perform a non-linear correction of the transient components 140, not only more than two additional storage devices 214, 214', 214"... for storing more than two additional values 222, 222', 222"... may be required but also additional means configured for performing a more complex determination of more than one correction value 220 as well as for a more complex setting of the controlled current source 224.

### List of reference numbers

- 110: magnitude
- 112: combined signal
- 114: voltage
- 116: time
- 118: desired signal
- 120: square wave
- 122: additional signal
- 124: offset (level)
- 126: ground (level)
- 128: supply voltage
- 130: lower limiting level
- 132: upper limiting level
- 134, 134', 134": time interval
- 136: threshold
- 138, 138', 138": period outside the time interval
- 140: transient component
- 142: repetition rate
- 144: chopper modulation
- 146: signal source
- 148: chopper modulator
- 150: input of the apparatus
- 152: apparatus
- 154: sum
- 156: control unit
- 158: stimulator
- 160: splitter
- 162: first signal path
- 164: second signal path
- 166: storage device
- 168: value of the magnitude of the combined signal
- 170, 170', 170": stored value
- 172, 172': subtracting device
- 174: subtrahend input of the subtracting device
- 176: minuend input of the subtracting device
- 178: difference (signal)
- 180: output of the subtracting device
- 182: clock generator
- 184: input amplifier
- 186: sample-and-hold circuit
- 188: capacitor
- 190: switch
- 192, 192': buffer
- 194: differential amplifier
- 196: resistor
- 198: resistor
- 200: resistor
- 202: resistor
- 204: second storage device
- 206: second capacitor
- 208: second switch
- 210: second buffer
- 212: copying device
- 213: copying (process)
- 214, 214', 214": additional storage device
- 216: distributor
- 218: correction value generator
- 220: correction value
- 222, 222', 222": additional value
- 224: controlled current source
- 226: additional switch

## Claims

1. A method for extracting a desired signal (118) from a combined signal (112), wherein the combined signal (112) exhibits a magnitude (110) which comprises a sum (154) of the magnitude (110) of the desired signal (118) and the magnitude (110) of an additional signal (122), the method comprising the following steps:
a) Within at least one time interval (134, 134', 134"), wherein the magnitude (110) of the desired signal (118) remains below a threshold (136), storing at least one value of the magnitude (110) of the combined signal (112) within the time interval (134, 134', 134") in a storage device (166) as at least one stored value (170, 170', 170");
b) Subtracting the stored value (170) from the magnitude (110) of the combined signal (112), by which difference (178) the magnitude (110) of the desired signal (118) is acquired outside the time interval (134, 134', 134"), wherein the magnitude (110) of the desired signal (118) stays at least partially above the threshold (136),
wherein step a) and step b) are repeated in this order at least once, wherein the stored value (170) is copied from the storage device (166) into a second storage device (204), wherein, during a subsequent step a) and/or a subsequent step b), the stored value (170) is taken from the second storage device (204) and subtracted from the magnitude (110) of the combined signal (112).

2. The method according to the preceding claim, wherein step a) and step b) are repeated consecutively in this order, wherein a chopper modulation (144) synchronizes the magnitude (110) of the desired signal (118) with respect to the time interval (134, 134', 134") in a manner that it consecutively remains below the threshold (136) within the time interval (134).

3. The method according to any one of the preceding claims, wherein at least two values of the magnitude (110) of the combined signal (112) within the at least one time interval (134, 134', 134") are additionally stored within at least two additional storage devices (214, 214', 214") as at least two additional values (222, 222', 222"), wherein at least one correction value (220) is derived from an additional difference between the at least two additional values (222, 222', 222"), wherein the correction value (220) is used for modifying at least one value in the storage device (166) and/or at least one value in the second storage device (204).

4. The method according to the preceding claim , wherein the at least one correction value (220) and/or the at least two additional values (222, 222', 222") and/or the at least one stored value (170) and/or the difference (178) are used for determining a quality of the desired signal (118) within the combined signal (112).

5. An apparatus (152) for extracting a desired signal (118) from a combined signal (112), wherein the combined signal (112) exhibits a magnitude (110) which comprises a sum (154) of the magnitude (110) of the desired signal (118) and the magnitude (110) of an additional signal (122), the apparatus (152) comprising:
- A storage device (166) for storing at least one value acquired from the magnitude (110) of the combined signal (112) within at least one time interval (134) as at least one stored value (170, 170', 170"), wherein the magnitude (110) of the desired signal (118) remains below a threshold (136) within the at least one time interval (134, 134', 134"); and
- A subtracting device (172) for subtracting the stored value from the magnitude (110) of the combined signal (112), by which difference (178) the magnitude (110) of the desired signal (118) is acquired outside the time interval (134, 134', 134"), wherein the magnitude (110) of the desired signal (118) stays at least partially above the threshold (136), and
- A splitter (160) for guiding the combined signal (112) along at least one first signal path (162) and at least one second signal path (164), wherein the first signal path (162) comprises at least the storage device (166), wherein an input into the subtracting device (172) comprises the stored value (170, 170', 170") as supplied by the first signal path (162) and the combined signal (112) as supplied by the second signal path (164), wherein the first signal path (162) further comprises a second storage device (204) and a copying device (212) for copying the stored value (170, 170', 170") from the storage device (166) to the second storage device (204).

6. The apparatus (152) according to the preceding claim, further comprising a chopper modulator (148) for synchronizing the magnitude (110) of the desired signal (118) in a manner that it remains below the threshold (136) within the time interval (134, 134', 134") and a control unit (156) for controlling the operation of the chopper modulator (148) and/or of the storage device (166).

7. The apparatus (152) according to any one of the preceding claims, wherein the operation of the second storage device (204) is controlled by the control unit (156).

8. The apparatus (152) according to any one of the preceding apparatus claims, further comprising an amplifier for amplifying the desired signal and/or a filtering device for filtering the desired signal and/or an analog-to-digital converter for converting the desired signal (118) into a digital signal.

9. A use of the apparatus (152) according to any one of the preceding apparatus claims for acquiring a magnitude (110) of a desired signal (118) which comprises an electrical and/or an electromagnetic signal, preferably a light signal, more preferably a fluorescence signal, wherein the desired signal (118) is superimposed by an additional signal (122), wherein the additional signal (122) is preferably influenced by ambient conditions, in particular by ambient light.

10. A use of the apparatus (152) according to any one of the preceding apparatus claims for acquiring a magnitude (110) of a desired signal (118) and/or information comprised within the desired signal (118), wherein the desired signal (118) comprises an electrical and/or an electromagnetic signal, preferably a light signal, wherein the desired signal (118) transports the information, wherein the desired signal (118) is superimposed by an additional signal (122), wherein the additional signal (122) is preferably influenced by ambient conditions, in particular by ambient radiation, more particular by ambient light.

## Patentansprüche

1. Verfahren zum Extrahieren eines gewünschten Signals (118) aus einem kombinierten Signal (112), wobei das kombinierte Signal (112) eine Größe (110) aufweist, die eine Summe (154) der Größe (110) des gewünschten Signals (118) und der Größe (110) eines zusätzlichen Signals (122) umfasst, wobei das Verfahren die folgenden Schritte umfasst:
a) Innerhalb mindestens eines Zeitintervalls (134, 134', 134"), in dem die Größe (110) des gewünschten Signals (118) unter einem Schwellenwert (136) bleibt, Speichern mindestens eines Wertes der Größe (110) des kombinierten Signals (112) innerhalb des Zeitintervalls (134, 134', 134") in einer Speichervorrichtung (166) als mindestens ein gespeicherter Wert (170, 170', 170");
b) Subtrahieren des gespeicherten Wertes (170) von der Größe (110) des kombinierten Signals (112), aus welcher Differenz (178) die Größe (110) des gewünschten Signals (118) außerhalb des Zeitintervalls (134, 134', 134") erfasst wird, wobei die Größe (110) des gewünschten Signals (118) zumindest teilweise über dem Schwellenwert (136) bleibt,
wobei Schritt a) und Schritt b) in dieser Reihenfolge mindestens einmal wiederholt werden, wobei der gespeicherte Wert (170) von der Speichervorrichtung (166) in eine zweite Speichervorrichtung (204) kopiert wird, wobei, während eines nachfolgenden Schrittes a) und/oder eines nachfolgenden Schrittes b), der gespeicherte Wert (170) von der zweiten Speichervorrichtung (204) entnommen und von der Größe (110) des kombinierten Signals (112) subtrahiert wird.

2. Verfahren nach dem vorhergehenden Anspruch, wobei Schritt a) und Schritt b) nacheinander in dieser Reihenfolge wiederholt werden, wobei eine Chopper-Modulation (144) die Größe (110) des gewünschten Signals (118) in Bezug auf das Zeitintervall (134, 134', 134") so synchronisiert, dass es nacheinander innerhalb des Zeitintervalls (134) unter dem Schwellenwert (136) bleibt.

3. Verfahren nach einem der vorhergehenden Ansprüche, wobei mindestens zwei Werte der Größe (110) des kombinierten Signals (112) innerhalb des mindestens einen Zeitintervalls (134, 134', 134") zusätzlich in mindestens zwei zusätzlichen Speichervorrichtungen (214, 214', 214") als mindestens zwei zusätzliche Werte (222, 222', 222'') gespeichert werden, wobei mindestens ein Korrekturwert (220) aus einer zusätzlichen Differenz zwischen den mindestens zwei zusätzlichen Werten (222, 222', 222") abgeleitet ist, wobei der Korrekturwert (220) zum Ändern mindestens eines Wertes in der Speichervorrichtung (166) und/oder mindestens eines Wertes in der zweiten Speichervorrichtung (204) verwendet wird.

4. Verfahren nach dem vorhergehenden Anspruch, wobei der mindestens eine Korrekturwert (220) und/oder die mindestens zwei zusätzlichen Werte (222, 222', 222") und/oder der mindestens eine gespeicherte Wert (170) und/oder die Differenz (178) zum Bestimmen einer Qualität des gewünschten Signals (118) innerhalb des kombinierten Signals (112) verwendet werden.

5. Vorrichtung (152) zum Extrahieren eines gewünschten Signals (118) aus einem kombinierten Signal (112), wobei das kombinierte Signal (112) eine Größe (110) aufweist, die eine Summe (154) der Größe (110) des gewünschten Signals (118) und der Größe (110) eines zusätzlichen Signals (122) umfasst, wobei die Vorrichtung (152) umfasst:
- Speichervorrichtung (166) zum Speichern mindestens eines Wertes, der von der Größe (110) des kombinierten Signals (112) innerhalb mindestens eines Zeitintervalls (134) als mindestens ein gespeicherter Wert (170, 170', 170") erfasst wurde, wobei die Größe (110) des gewünschten Signals (118) innerhalb des mindestens einen Zeitintervalls (134, 134', 134") unter einem Schwellenwert (136) bleibt; und
- Subtraktionsvorrichtung (172) zum Subtrahieren des gespeicherten Wertes von der Größe (110) des kombinierten Signals (112), aus welcher Differenz (178) die Größe (110) des gewünschten Signals (118) außerhalb des Zeitintervalls (134, 134', 134") erfasst wird, wobei die Größe (110) des gewünschten Signals (118) zumindest teilweise über dem Schwellenwert (136) bleibt, und
- Verteiler (160) zum Führen des kombinierten Signals (112) entlang mindestens eines ersten Signalwegs (162) und mindestens eines zweiten Signalwegs (164), wobei der erste Signalweg (162) mindestens die Speichervorrichtung (166) umfasst, wobei eine Eingabe in die Subtraktionsvorrichtung (172) den gespeicherten Wert (170, 170', 170"), wie durch den ersten Signalweg (162) bereitgestellt, und das kombinierte Signal (112), wie durch den zweiten Signalweg (164) bereitgestellt, umfasst, wobei der erste Signalweg (162) ferner eine zweite Speichervorrichtung (204) und eine Kopiervorrichtung (212) zum Kopieren des gespeicherten Wertes (170, 170', 170") von der Speichervorrichtung (166) zur zweiten Speichervorrichtung (204) umfasst.

6. Vorrichtung (152) nach dem vorhergehenden Anspruch, ferner umfassend einen Chopper-Modulator (148) zum Synchronisieren der Größe (110) des gewünschten Signals (118) in einer Weise, dass es innerhalb des Zeitintervalls (134, 134', 134") unter dem Schwellenwert (136) bleibt, und eine Steuereinheit (156) zum Steuern des Betriebs des Chopper-Modulators (148) und/oder der Speichervorrichtung (166).

7. Vorrichtung (152) nach einem der vorhergehenden Ansprüche, wobei der Betrieb der zweiten Speichervorrichtung (204) durch die Steuereinheit (156) gesteuert wird.

8. Vorrichtung (152) nach einem der vorhergehenden Ansprüche für die Vorrichtung, ferner umfassend einen Verstärker zum Verstärken des gewünschten Signals und/oder eine Filtervorrichtung zum Filtern des gewünschten Signals und/oder einen Analog-DigitalWandler zum Umwandeln des gewünschten Signals (118) in ein digitales Signal.

9. Verwendung der Vorrichtung (152) nach einem der vorhergehenden Ansprüche für die Vorrichtung, um eine Größe (110) eines gewünschten Signals (118) zu erfassen, das ein elektrisches und/oder ein elektromagnetisches Signal, vorzugsweise ein Lichtsignal, noch bevorzugter ein Fluoreszenzsignal, insbesondere ein Fluoreszenzsignal, umfasst, wobei das gewünschte Signal (118) durch ein zusätzliches Signal (122) überlagert ist, wobei das zusätzliche Signal (122) vorzugsweise durch Umgebungsbedingungen, insbesondere durch Umgebungslicht, beeinflusst wird.

10. Verwendung der Vorrichtung (152) nach einem der vorhergehenden Ansprüche für die Vorrichtung, um eine Größe (110) eines gewünschten Signals (118) und/oder Informationen zu erfassen, die in dem gewünschten Signal (118) enthalten sind, wobei das gewünschte Signal (118) ein elektrisches und/oder ein elektromagnetisches Signal, vorzugsweise ein Lichtsignal, umfasst, wobei das gewünschte Signal (118) die Informationen transportiert, wobei das gewünschte Signal (118) durch ein zusätzliches Signal (122) überlagert ist, wobei das zusätzliche Signal (122) vorzugsweise durch Umgebungsbedingungen beeinflusst wird, speziell durch Umgebungsstrahlung, noch spezifischer durch Umgebungslicht.

## Revendications

1. Procédé pour extraire un signal souhaité (118) à partir d'un signal combiné (112), dans lequel le signal combiné (112) présente une amplitude (110) qui comprend une somme (154) de l'amplitude (110) du signal souhaité (118) et de l'amplitude (110) d'un signal supplémentaire (122), le procédé comprenant les étapes suivantes consistant :
a) pendant au moins un intervalle de temps (134, 134', 134"), dans lequel l'amplitude (110) du signal souhaité (118) reste en dessous d'un seuil (136), à stocker au moins une valeur de l'amplitude (110) du signal combiné (112) pendant l'intervalle de temps (134, 134', 134") dans un dispositif de stockage (166) sous la forme d'au moins une valeur stockée (170, 170', 170") ;
b) à soustraire la valeur stockée (170) de l'amplitude (110) du signal combiné (112), grâce à laquelle différence (178), l'amplitude (110) du signal souhaité (118) est acquise en dehors de l'intervalle de temps (134, 134', 134"), dans lequel l'amplitude (110) du signal souhaité (118) reste au moins partiellement au-dessus du seuil (136),
dans lequel l'étape a) et l'étape b) sont répétées dans cet ordre au moins une fois, dans lequel la valeur stockée (170) est copiée à partir du dispositif de stockage (166) dans un second dispositif de stockage (204), dans lequel, pendant une étape a) ultérieure et/ou pendant une étape b) ultérieure, la valeur stockée (170) est prise à partir du second dispositif de stockage (204) et soustraite de l'amplitude (110) du signal combiné (112) .

2. Procédé selon la revendication précédente, dans lequel l'étape a) et l'étape b) sont répétées de manière continue dans cet ordre, dans lequel une modulation de hacheur (144) synchronise l'amplitude (110) du signal souhaité (118) par rapport à l'intervalle de temps (134, 134', 134") de telle manière qu'elle reste consécutivement en dessous du seuil (136) pendant l'intervalle de temps (134).

3. Procédé selon l'une quelconque des revendications précédentes, dans lequel au moins deux valeurs de l'amplitude (110) du signal combiné (112) pendant le ou les intervalles de temps (134, 134', 134") sont de plus stockées dans au moins deux dispositifs de stockage supplémentaires (214, 214', 214") sous la forme d'au moins deux valeurs supplémentaires (222, 222', 222"), dans lequel au moins une valeur de correction (220) est dérivée d'une différence supplémentaire entre les deux, ou plus, valeurs supplémentaires (222, 222', 222"), dans lequel la valeur de correction (220) est utilisée pour modifier au moins une valeur dans le dispositif de stockage (166) et/ou au moins une valeur dans le second dispositif de stockage (204) .

4. Procédé selon la revendication précédente, dans lequel la ou les valeurs de correction (220) et/ou les deux, ou plus, valeurs supplémentaires (222, 222', 222") et/ou la ou les valeurs stockées (170) et/ou la différence (178) sont utilisées pour déterminer une qualité du signal souhaité (118) dans le signal combiné (112).

5. Appareil (152) pour extraire un signal souhaité (118) à partir d'un signal combiné (112), dans lequel le signal combiné (112) présente une amplitude (110) qui comprend une somme (154) de l'amplitude (110) du signal souhaité (118) et de l'amplitude (110) d'un signal supplémentaire (122), l'appareil (152) comprenant :
- un dispositif de stockage (166) pour stocker au moins une valeur acquise de l'amplitude (110) du signal combiné (112) pendant au moins un intervalle de temps (134) sous la forme d'au moins une valeur stockée (170, 170', 170"), dans lequel l'amplitude (110) du signal souhaité (118) reste en dessous d'un seuil (136) pendant le ou les intervalles de temps (134, 134', 134") ; et
- un dispositif de soustraction (172) pour soustraire la valeur stockée de l'amplitude (110) du signal combiné (112), grâce à laquelle différence (178), l'amplitude (110) du signal souhaité (118) est acquise en dehors de l'intervalle de temps (134, 134', 134"), dans lequel l'amplitude (110) du signal souhaité (118) reste au moins partiellement au-dessus du seuil (136), et
- un diviseur (160) pour guider le signal combiné (112) le long d'au moins un premier trajet de signal (162) et d'au moins un second trajet de signal (164), dans lequel le premier trajet de signal (162) comprend au moins le dispositif de stockage (166), dans lequel une entrée dans le dispositif de soustraction (172) comprend la valeur stockée (170, 170', 170") telle que fournie par le premier trajet de signal (162) et le signal combiné (112) tel que fourni par le second trajet de signal (164), dans lequel le premier trajet de signal (162) comprend en outre un second dispositif de stockage (204) et un dispositif de copie (212) pour copier la valeur stockée (170, 170', 170") à partir du dispositif de stockage (166) dans le second dispositif de stockage (204) .

6. Appareil (152) selon la revendication précédente, comprenant en outre un modulateur de hacheur (148) pour synchroniser l'amplitude (110) du signal souhaité (118) de telle manière qu'elle reste en dessous du seuil (136) pendant l'intervalle de temps (134, 134', 134"), et une unité de commande (156) pour commander le fonctionnement du modulateur de hacheur (148) et/ou du dispositif de stockage (166).

7. Appareil (152) selon l'une quelconque des revendications précédentes, dans lequel le fonctionnement du second dispositif de stockage (204) est commandé par l'unité de commande (156).

8. Appareil (152) selon l'une quelconque des revendications précédentes, comprenant en outre un amplificateur pour amplifier le signal souhaité et/ou un dispositif de filtrage pour filtrer le signal souhaité et/ou un convertisseur analogique-numérique pour convertir le signal souhaité (118) en un signal numérique.

9. Utilisation de l'appareil (152) selon l'une quelconque des revendications précédentes de l'appareil pour acquérir une amplitude (110) d'un signal souhaité (118) qui comprend un signal électrique et/ou un signal électromagnétique, de préférence un signal lumineux, plus préférentiellement un signal de fluorescence, dans lequel le signal souhaité (118) est superposé par un signal supplémentaire (122), dans lequel le signal supplémentaire (122) est, de préférence, influencé par des conditions ambiantes, en particulier par une lumière ambiante.

10. Utilisation de l'appareil (152) selon l'une quelconque des revendications précédentes de l'appareil pour acquérir une amplitude (110) d'un signal souhaité (118) et/ou des informations incluses dans le signal souhaité (118), dans lequel le signal souhaité (118) comprend un signal électrique et/ou un signal électromagnétique, de préférence un signal lumineux, dans lequel le signal souhaité (118) transporte les informations, dans lequel le signal souhaité (118) est superposé par un signal supplémentaire (122), dans lequel le signal supplémentaire (122) est, de préférence, influencé par des conditions ambiantes, en particulier par un rayonnement ambiant, plus particulièrement par une lumière ambiante.
